# EUROPEAN PATENT APPLICATION

(11) **EP 1 075 130 A2**
(43) Date of publication of application: **07.02.2001**
(21) Application number: 00113159.8
(22) Date of filing: 29.06.2000
(51) Int. Cl.: H04M 3/523

(54) **Call queuing algorithms for telephone switch**

(30) Priority: 06.08.1999 US 369603
(71) Applicant: Rockwell Electronic Commerce Corporation, Wood Dale, Illinois 60191 (US)
(72) Inventor: Dezonno, Anthony J., Chicago, Illinois 60631 (US)
(74) Representative: Modiano, Guido, Dr.-Ing.

(57) **Abstract**

A method and apparatus are provided for assigning calls of a plurality of call types processed by an automatic call distributor to a plurality of agents. The method includes the steps of determining an average talk time for each agent of the plurality of agents, for a first call type of the plurality of call types, receiving a call of the first call type and assigning an agent of the plurality of agents to the received call of the first call type based upon the determined average talk time of the agent.

## Description

### Field of the Invention

The field of the invention relates to telephony systems and more particularly to automatic call distributors used with private networks.

### Background of the Invention

Automatic call distribution systems are known. Such systems are typically used in an organizational context as a means of distributing telephone calls among a group of agents of the organization. Agents are typically segregated into groups to serve particular call targets within an organization.

Often the organization disseminates a single telephone number to its customers and to the public in general as a means of contacting the organization. As calls are directed to the organization from the public switch telephone network (PSTN), an automatic call distributor (ACD) directs the calls to its agents using some assignment algorithm, typically based upon availability.

As incoming calls are detected, information about the calls (e.g., ANI, DNIS, etc.) is typically delivered by the PSTN to the ACD. Where the information contains an identifier of the caller (i.e., ANI information), the ACD may use such information to identify information about the caller in a database of the ACD. The ACD may transfer any identified information about the caller to a terminal of an agent as the call is delivered to the agent.

Where all agents are considered equal, the automatic call distributor (ACD) may distribute the calls (select an agent to handle a call) based upon which agent position (telephone) has been idle the longest. In other systems, where skill is considered important for call handling, a call may be directed to an agent group (and agent) considered the most qualified for handling the call.

In selecting an agent to handle a call, the ACD may consider a number of factors. On a most basic level, where all agents are considered equal and calls are concerned with only a narrow range of subject matter, the ACD may need only consider agent idle time.

In other systems where the subject matter is more complex, the ACD may want to select an agent who is better qualified to handle certain questions. In order to assign agents in this environment, the ACD may need information on an agent's qualification and also of the type of call arriving.

In solving this problem a manager may evaluate agent qualification based upon a number of criteria. Further, agents with a higher qualification for a call type directed to a particular subject matter may be grouped together and given preferential treatment for regard to assignment to that type of call. Separate telephone numbers may also be disseminated to the public for each type of call as a means of more easily identifying a subject matter and a qualification needed for handling each type of call.

To assign calls in such an environment, the ACD may first determine what type of call has been received. The ACD may determine the call type from ANI and/or DNIS information. Once a call type has been determined, steps can be taken to match the type of call with an appropriate agent.

Where assignment is based upon idle time, the ADD simply determines which agent has been idle the longest. Where assignment is based upon qualifications for a call, the ACD first determines the type of call and then the identity of the most qualified agent. The ACD may either queue the call for availability of the selected agent or limit the scope of considered agents to those agents who are then idle.

While prior art methods are effective, they are inflexible and fail to optimize agent performance under varying conditions of call center loading. Accordingly, a need exists for a method and apparatus for selecting agents that is flexible, yet optimized to maximize call throughput.

### Summary

A method and apparatus are provided for assigning calls of a plurality of call types processed by an automatic call distributor to a plurality of agents. The method includes the steps of determining an average talk time for each agent of the plurality of agents, for a first call type of the plurality of call types, receiving a call of the first call type and assigning an agent of the plurality of agents to the received call of the first call type based upon the determined average talk time of the agent.

### Brief Description of the Drawings

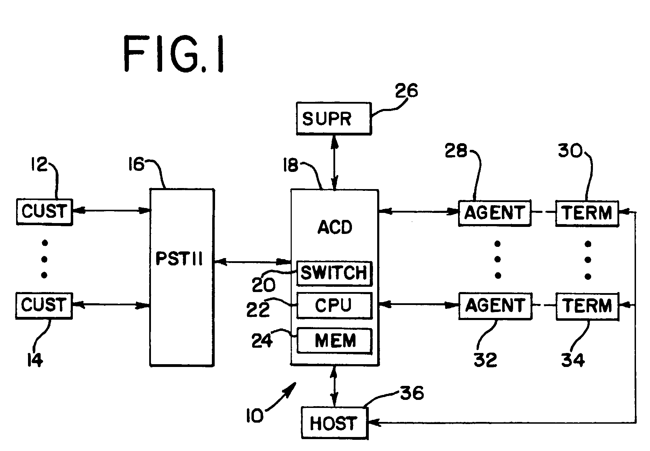

FIG. 1 depicts an automatic call distributor in accordance with an illustrated embodiment of the invention.

### Detailed Description of a Preferred Embodiment

FIG. 1 is a block diagram of an ACD system 10, generally in accordance with an illustrated embodiment of the invention. Under the illustrated embodiment, calls are received by the ACD 18 through the public switched telephone network (PSTN) 16 from customers 12, 14. As calls are received, they are delivered along with call associated information (e.g., ANI, DNIS, etc.) from the PSTN 18 to the ACD 18. The ACD 18, in turn, routes incoming calls to agents assigned to telephones 28, 32 and associated terminals 30, 34 (the agent hereinafter sometimes referred to as agent 28, 32).

As the calls are received, an agent may be selected by a central processing unit (CPU) 22 of the ACD 18. Once an agent 28, 32 has been selected, the CPU 22 of the ACD 18 instructs the switch 20 to form a connection between an incoming trunk line from the PSTN 16 and the selected agent 28, 32.

In association with agent selection, the CPU 22 sends the call associated information along with an identifier of the selected agent to a host 36. The host 36 uses the call associated information (i.e., ANI) to locate records relating to the call and sends the information to a terminal 30, 34 of the selected agent 28, 32. The terminal 30, 34 receives the information and displays the information (e.g., as a screen pop) as the call arrives from the switch 20.

Agent selection, by the CPU 20 may be accomplished under any of a number of different assignment algorithms. Further, the algorithms may change based upon any of a number of factors (e.g., time of day, call loading, etc.).

For example, under a first algorithm, the CPU 22 may track and record a talk time of each agent for each call type. Over a time period (e.g., a day, week, month, etc.), the CPU 22 may sum the talk time for each call type and divide by the number of calls to determine an average talk time (ATT) of each agent for each call type handled by the agent.

It has been found that there is a wide variation in ATT among agents and groups of agents. For example, a more skilled agent may have a lower ATT for each call type. Agents who have just signed-on at a beginning of a shift may have a lower (or higher) ATT depending on the agent. Some agents may have a lower ATT for some call types, but not others.

Based upon statistics on ATT over many calls, the efficiency of an ACD may be considerably improved by using ATT as a basis for call assignment. Typically a number of algorithms, each based upon a different measured agent metric may be used for call assignment in conjunction with ATT. Alternatively, ATT may also be used by itself under certain conditions.

For instance, where short term overloads are detected by the CPU 22 (based upon the number of calls in a group queue), the CPU 22 may begin assigning calls based upon ATT. For instance, within an agent group some agents may be assigned to administrative duties, while other agents are assigned to receiving calls. Upon detection of an overload, the work distribution may be rearranged by the CPU 22 to concentrate agents with the lowest ATT in the list of available agents for the group. The CPU 22 may then distribute calls by first identifying a call type and then assigning the agent with the lowest ATT for that call type.

In some other circumstances, where there are many agent groups, agents with relatively low ATTs may be distributed over many groups. Where one or more groups are detected as being overloaded, the groups may be automatically rearranged by the CPU 22 to concentrate one or more agents with the lowest ATTs (in general or for call types handled by the overloaded group) in the overloaded group. The addition of agents with the lowest ATTs in the overloaded group may be used to quickly dissipate the overload.

It has been recognized that subjecting highly qualified agents to higher workloads for extended periods, without relief, can lead to agent burn-out and, ultimately, to a lower overall productivity of the ACD system 10. However, what has not been generally recognized in the industry is that ATT may be used under certain circumspective conditions to significantly improve overall performance of an ACD system 10. To avoid the deleterious effects of the higher workloads experienced by some agents, ATT may be used in conjunction with a number of other algorithms based upon other agent metrics.

For instance, during normal (lightly loaded) periods, agents may be assigned calls using an algorithm based upon agent idle time (idle time algorithm). A timer within the CPU 22 may be associated with each agent 28, 32, which begins measuring agent idle time from the point where the agent completes the previous call. During periods of light call loading, the agent with the longest measured idle time may be assigned the next incoming call.

Further, during lightly loaded periods a training algorithm may be used in conjunction with the idle time algorithm for training purposes. During these periods, less skilled agents may preferentially be given calls of a specific call type as a means of increasing the skills of these agents in handling that type of call.

During periods of increased loading, other algorithms may be used singly or in combination. For instance, once an agent has conversed with a customer and an order has been placed, the agent may enter a wrap-up period, were the terms of the order and shipping instructions may be confirmed. An agent entering the wrap-up period may signal the CPU 22 of such condition by placing a mouse on a display of his terminal over a wrap-up icon and activating a mouse button.

The CPU 22, upon detecting entry into the wrapup phase, may place the agent back into an available state for receiving calls. As the agent ultimately hangs up, another call may already be queued and immediately connected to the agent.

Another algorithm used for call assignment may be based upon agent skills. Under this skill-based algorithm, an agent supervisor may rate each agent based upon one or more skills. Skill ratings may be entered by the supervisor through the supervisor terminal 26 and stored in memory 24. The wrap-up algorithm may be used in conjunction with the skill based algorithm, or even with the ATT algorithm.

As calls arrive, they may be classified by call type. Call type may be determined by the call associated information. From call associated information such as DNIS, the CPU 22 may determine the call target. For example, a special telephone number may be provided for a special sales promotion. The DNIS number may provide information as to the type of skill required by the agent to be assigned to the call.

Other call associated information such as ANI may be used to identify specific customers. Some agents may be better equipped to handle some customers than others. ANI may be used to identify the agent best qualified to handle a call based upon this type of information. While a call may initially be classified as a call type intended for routing under a first algorithm (e.g., skill based, idle time, training, etc.), ANI information may be used to reclassify the call type as a candidate for special handling.

For example, some customers are inherently impatient. Agents who respond slowly or who appear inept in responding to customer questions are known to extend the time required for a telephone transaction and to negatively impact customer good will in certain circumstances. Where a customer group is identified as having this characteristic, ATT may be used as a metric, which may be used to improve customer relations. ATT, in fact, may be used exclusively with this particular type of call.

In the alternative (and as discussed above), call loading may also be used as a trigger point for invoking call assignment using ATT. Call loading of the ACD system 10 may be determined under any of a number of formats. For example, where the agents 28, 32 are divided into groups, loading may be determined based upon the number of calls per hour handled by each group, or by queue length. Alternatively, call loading may be determined by the sum of all calls to all groups in any particular time period.

As a call loading of the ACD 10 changes, the algorithm or mix of algorithms used for call assignment may change with the loading level. At a first threshold level (e.g., less than 50%), call assignment may be based upon agent idle time. Calls may also be assigned to agents under a training algorithm for training purposes.

As the loading level increases above the first threshold level, training may be suspended and calls may be assigned using a skill based algorithm. As the loading level increases above a second threshold (e.g., 75%) the wrap-up algorithm may be initiated to queue new calls to agents while they are in the wrap-up phase of a previous call.

If any particular group becomes overloaded an ATT algorithm may be implemented assigning agents within a group based upon ATT or drawing additional agents from other groups based upon ATT for the call type of the group. As the loading level fluctuates, the mix of algorithms used for agent assignment may be adjusted dynamically.

The use of ATT has been found to be a significant improvement over prior methods during periods of peak call loading. The use of ATT in conjunction with a variety of other agent assignment algorithms has been found to significantly improve agent efficiency and productivity.

A specific embodiment of a method and apparatus for assigning agents of an automatic call distributor to calls according to the present invention has been described for the purpose of illustrating the manner in which the invention is made and used. It should be understood that the implementation of other variations and modifications of the invention and its various aspects will be apparent to one skilled in the art, and that the invention is not limited by the specific embodiments described. Therefore, it is contemplated to cover the present invention and any and all modifications, variations, or equivalents that fall within the true spirit and scope of the basic underlying principles disclosed and claimed herein.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of assigning calls of a plurality of call types processed by an automatic call distributor to a plurality of agents, such method comprising the steps of:
determining an average talk time for each agent of the plurality of agents, for a first call type of the plurality of call types;
receiving a call of the first call type; and
assigning an agent of the plurality of agents to the received call of the first call type based upon the determined average talk time of the agent.

2. Apparatus for assigning calls of a plurality of call types processed by an automatic call distributor to a plurality of agents, such apparatus comprising:
means for determining an average talk time for each agent of the plurality of agents, for a first call type of the plurality of call types;
means for receiving a call of the first call type; and
means for assigning an agent of the plurality of agents to the received call of the first call type based upon the determined average talk time of the agent.

3. The invention of assigning calls as in claims 1 or 2 further comprising selecting a call assignment algorithm of a plurality of call assignment algorithms, more particularly comprising means for performing said selection.

4. The invention of assigning calls as in claim 3 further comprising associating average talk time with at least a first algorithm of the plurality of algorithms, more particularly comprising means for associating said step of associating said average talk time.

5. The invention of assigning calls as in claim 4 further comprising measuring an agent metric of a plurality of other agent metrics other than agent talk time and associating at least one measured agent metric with at least some algorithms of the plurality of algorithms, more particularly comprising means for said measurement.

6. The invention of assigning calls as in claim 5 further comprising determining a call loading level of the automatic call distributor, more particularly comprising means for said determination.

7. The invention of assigning calls as in claim 6 wherein the step of measuring the call loading level further comprises determining a call arrival rate per time period for the first call type, more particularly comprising means for said determination.

8. The invention of assigning calls as in claim 6 wherein the step of measuring the call loading level further comprises summing a call arrival rate per time period of each call type of the plurality of call types, more particularly comprising means for said summing step.

9. The invention of assigning calls as in claim 6 further comprising selecting the first algorithm for assigning calls when the call loading level exceeds a first threshold and selecting some other algorithm of the plurality of algorithms when the call loading level exceeds a second call loading threshold, more particularly comprising means for selecting said first algorithm and means for selecting said some other algorithm.

10. The invention of assigning calls as in claim 9 wherein the step of selecting the algorithm of the plurality of algorithms further comprises determining a call type of a received call, more particularly comprising means for said determination.

11. The invention of assigning calls as in claim 5 wherein the step of measuring a metric of the plurality of other metrics further comprises determining an agent idle time, more particularly comprising means for said determination of an agent idle time.

12. The invention of assigning calls as in claim 5 wherein the step of measuring a metric of the plurality of other metrics further comprises determining an elapsed time since each agent has signed-on to the automatic call distributor, more particularly comprising means for the determination of said elapsed time.

13. The invention of assigning calls as in claim 5 wherein the step of measuring a metric of the plurality of metrics further comprises determining an elapsed time since an agent has entered a wrap-up period, more particularly comprising means for performing said determination of an elapsed time.

14. The invention of assigning calls as in claim 5 wherein the step of measuring a metric of the plurality of other metrics further comprises determining an agent skill level for each call type of the plurality of call types, more particularly comprising means for determining said skill level.

15. The invention of assigning calls as in claim 10 further comprising providing a call queue for each selected algorithm of the plurality of algorithms for the assigned calls of the plurality of call types processed by the automatic call distributor, more particularly comprising means for providing said call queue.

16. The invention of assigning calls as in claim 15 wherein the step of providing a call queue further comprises determining a relative position of an assigned call in the queue based upon call associated information delivered with the assigned call, more particularly providing means for the determination of said relative position.
